# NEUE EUROPÄISCHE PATENTSCHRIFT

(11) **EP 1 274 330 B2**
(45) Veröffentlichungstag und Bekanntmachung des Hinweises auf die Entscheidung über den Einspruch: **23.09.2009**
(45) Hinweis auf die Patenterteilung: 02.06.2004
(21) Anmeldenummer: 01927597.3
(22) Anmeldetag: 24.03.2001
(51) Int. Cl.: A47B 9/04, B66F 3/10, F16H 25/20

(54) **VORRICHTUNG ZUM VERSTELLEN VON RELATIV ZUEINANDER BEWEGLICHEN TEILEN**
DEVICE FOR ADJUSTING PARTS WHICH CAN MOVE IN RELATION TO EACH OTHER
DISPOSITIF DE REGLAGE DU DEPLACEMENT DE PIECES MOBILES L'UNE PAR RAPPORT A L'AUTRE

(30) Priorität: 15.04.2000 DE 10018742
(43) Veröffentlichungstag der Anmeldung: 15.01.2003
(73) Patentinhaber: OKIN Motion Technologies GmbH, 51645 Gummersbach (DE)
(72) Erfinder: KOCH, Dietmar, 51645 Gummersbach (DE)
(74) Vertreter: Stachow, Ernst-Walther
(86) Internationale Anmeldenummer: PCT/DE2001/001145
(87) Internationale Veröffentlichungsnummer: WO 2001/078556

(56) Entgegenhaltungen:
- DE-A- 3 910 814
- DE-A- 19 711 773
- DE-C- 4 426 937
- FR-A- 2 625 488

## Beschreibung

Die Erfindung betrifft eine Vorrichtung zum Verstellen von relativ zueinander beweglichen Teilen, insbesondere Teilen von verstellbaren Möbeln, mit einer antreibbaren Gewindehohlspindel, deren Innen- und Außengewinde entgegengesetzte Steigungsrichtungen aufweisen, einer mit dem Innengewinde der Gewindehohlspindel zusammenwirkenden Innenspindel, die mit einer ersten Befestigungseinrichtung zur Befestigung der Vorrichtung an einem der beweglichen Teile verbunden ist, und einem über eine Außenmutter mit dem Außengewinde der Gewindehohlspindel zusammenwirkenden Schubrohr, das mit einer zweiten Befestigungseinrichtung zur Befestigung der Vorrichtung an einem anderen der relativ zueinander beweglichen Teile verbunden ist, wobei die Gewindehohlspindel an einer um die Achse der Gewindehohlspindel drehbar antreibbaren Mitnahmeeinrichtung drehfest und längs bewegbar gelagert ist, die Mitnahmeeinrichtung als Profilrohr ausgebildet ist, in dessen Profil ein an der Gewindehohlspindel angeordnetes Mitnahmeprofil eingreift, der äußere Gewindedurchmesser der Innenspindel kleiner ist als der Innendurchmesser des Profilrohrs und wobei ein Schutz für das Gewinde der Gewindehohlspindel vorgesehen ist, der sich im wesentlichen über die Länge ausgebildet erstreckt und als Teleskoprohr ausgebildet ist, das an einem Ende längs verschiebbar auf dem Schubrohr geführt ist. Eine solche Vorrichtung ist aus der FR 2 625 488 A1 bekannt.

Eine derartige Vorrichtung ermöglicht längere Verstellwege zwischen den Befestigungseinrichtungen im Vergleich zu herkömmlichen Verstellvorrichtungen, die ausschließlich eine Spindel mit Außengewinde und darauf verfahrbarer Stellmutter verwenden. Während bei einer solchen Verstellvorrichtung der Verstellweg dem von der Stellmutter zurückgelegten Weg entspricht, setzt sich der Verstellweg bei einer Vorrichtung der eingangs genannten Art aus der Summe des von der Mutter auf der Gewindehohlspindel zurückgelegten Wegs und der gleichzeitigen Verstellung der Innenspindel zusammen. Sind die beiden entgegengesetzten Steigungen des Innen- und Außengewindes der Gewindehohlspindel gleich, so kann etwa der doppelte Verstellweg im Vergleich zu einer lediglich mit einem Außengewinde versehenen Spindel erreicht werden.

Eine Vorrichtung der eingangs genannten Art ist aus der DE 196 00 326 A1 bekannt. Bei dieser Vorrichtung bilden der Antrieb und die Gewindehohlspindel eine Einheit, wobei der Antriebsmotor an einem Ende der Gewindehohlspindel angeordnet ist und diese über ein Schneckenradgetriebe antreibt. Die Innenspindel tritt an dem genannten Ende aus der Gewindehohlspindel aus und ist an ihrem außen liegenden Ende mit einer ersten Befestigungseinrichtung zur Befestigung der Vorrichtung an einem der relativ zueinander beweglichen Teile verbunden. Auf der gegenüberliegenden Seite des Antriebsmotors sind die mit dem Außengewinde der Gewindehohlspindel zusammenwirkende Außenmutter und das Schubrohr angeordnet, an dessen freiem Ende die zweite Befestigungseinrichtung zur Befestigung der Vorrichtung an einem anderen der relativ zueinander beweglichen Teile angebracht ist.

Während die Innenspindel und das Schubrohr über die Befestigungseinrichtungen verdrehsicher gegenüber den relativ zueinander beweglichen Teilen gehalten sind, stützt sich die aus dem Schneckenradantrieb und der Gewindehohlspindel bestehende Einheit durch eine Flachschiene gegenüber der Innenspindel und der aus dem Schubrohr und der Außenmutter gebildeten Einheit ab. Beim Antrieb der Gewindehohlspindel bewegt sich daher diese zusammen mit dem Antriebsmotor relativ zu beiden Befestigungseinrichtungen, und zwar zur ersten Befestigungseinrichtung um den Verstellweg relativ zur Innenspindel und zur zweiten Befestigungseinrichtung um den Verstellweg relativ zur Außenmutter und dem Schubrohr. Da der Antriebsmotor seitlich der ohnehin relativ breiten Gewindehohlspindel beträchtlich vorsteht, benötigt die bekannte Vorrichtung nicht nur relativ viel freien Raum, sondern birgt auch die Gefahr des Einklemmens von Gegenständen zwischen dem Antriebsmotor und insbesondere dem mit der ersten Befestigungseinrichtung verbundenen Teil sowie andere Sicherheitsrisiken, wenn sie nach außen hin, zum Beispiel in einem Möbel, freiliegt. Zur Vermeidung derartiger Gefahren ist die bekannte Vorrichtung, wenn sie nach außen hin zugänglich ist, mit einem relativ großen Schutzgehäuse zu umgeben. Wird die Vorrichtung zum Beispiel zur Höhenverstellung eines Tisches verwendet, so benötigt der Tisch eine relativ dicke, für den Benutzer hinderliche und optisch-ästhetisch wenig ansprechende Standsäule.

Die DE 39 10 814 A1 beschreibt eine gattungsgemäße Vorrichtung zum Verstellen von relativ zueinander beweglichen Teilen, wobei zum Schutz der Gewinde der Gewindehohlspindel und der Innenspindel mit diesen verbundene Kappen vorgesehen sind, die sich jeweils im wesentlichen über die Länge der Gewindehohlspindel und der Innenspindel erstrecken.

Der vorliegenden Erfindung liegt daher die Aufgabe zugrunde, eine Vorrichtung der eingangs genannten Art so weiterzuentwickeln, dass ein verbesserter Schutz des Gewindes der Gewindehohlspindel gegeben ist.

Die Aufgabe wird erfindungsgemäß dadurch' gelöst, dass der Schutz am anderen Ende drehbar und unverschiebbar auf der Gewindespindel gelagert ist. Vorteilhafte Ausführungen ergeben sich aus den Unteransprüchen.

Aufgrund der erfindungsgemäßen Konstruktion kann die Mitnahmeeinrichtung mit dem Antriebsmotor ortsfest gegenüber der mit dem Schubrohr verbundenen zweiten Befestigungseinrichtung angeordnet werden, wobei der Antriebsmotor in unmittelbarer Nachbarschaft zu dem mit der zweiten Befestigungseinrichtung verbundenen relativ beweglichen Teil positionierbar ist. Da die Innenspindel über die erste Befestigungseinrichtung ortsfest gegenüber einem anderen der relativ zueinander beweglichen Teile angeordnet ist, führt die über die Mitnahmeeinrichtung angetriebene Gewindehohlspindel eine Drehbewegung aus, die einerseits eine relative Verstellung gegenüber der Innenspindel und andererseits eine relative Verstellung gegenüber der Außenmutter mit dem Schubrohr bewirkt. Das Schubrohr ist dabei in Längsrichtung feststehend gegenüber der Mitnahmeeinrichtung angeordnet.

Da der Antriebsmotor mit seinem Gehäuse in unmittelbarer Nähe eines der relativ zueinander beweglichen Teile positionierbar ist und einen mindestens der Länge der Gewindehohlspindel entsprechenden Abstand zu dem mit der Innenspindel verbundenen relativ beweglichen Teil aufweist, besteht weder die Gefahr eines Einklemmens von Gegenständen noch ein anderes Sicherheitsproblem beim Verstellvorgang. Um die Gewindehohlspindel und die Innenspindel nach außen zu schützen, genügt ein relativ schlankes Gehäuse, das die Gewindehohlspindel und die Innenspindel eng umschließt. Wird die erfindungsgemäße Vorrichtung zum Beispiel zum Verstellen der Tischhöhe in einer Standsäule eines Tisches verwendet, so kann die Standsäule relativ schlank ausgebildet werden, wodurch eine größere Beinfreiheit für eine am Tisch sitzende oder stehende Person und eine optisch-ästhetisch ansprechende Wirkung erzielt werden.

Da die Mitnahmeeinrichtung als Profilrohr ausgebildet ist, in dessen Profil ein an der Gewindehohlspindel angeordnetes Mitnahmeprofil eingreift, kann die Mitnahmeeinrichtung und deren drehfeste und längs verschiebbare Lagerung auf der Gewindehohlspindel mit einfachsten Mitteln hergestellt werden.

Das Profilrohr ist vorteilhafterweise an einem Ende mit der Motorwelle eines Antriebsmotors drehfest verbunden. Der Antriebsmotor kann zum Beispiel ein Schneckenradgetriebe aufweisen, so dass er in einem relativ schmalen, seitlich vorstehenden Gehäuse, zum Beispiel unterhalb einer höhenverstellbaren Tischplatte, angeordnet werden kann.

In einer bevorzugten Ausbildung der Erfindung erstreckt sich das Profilrohr mit einem Ende in die Gewindehohlspindel hinein. Dabei ist das Mitnahmeprofil an dem zum Profilrohr gerichteten Ende an der Innenseite der Gewindehohlspindel angeordnet.

Zweckmäßigerweise weist die Gewindehohlspindel an ihrem vom Profilrohr weg gerichteten Ende eine Verengung auf, in der das Innengewinde ausgebildet ist. Im übrigen Innenbereich ist die Gewindehohlspindel zur gleitenden Aufnahme des Profilrohrs ausgebildet. Die Verengung kann einstückig mit der Gewindehohlspindel ausgebildet oder separat als Mutter mit einer rohrförmig ausgebildeten Hohlspindel fest verbunden sein.

In einer einfachen Ausbildung weist das Profilrohr zwei gegenüberliegende, sich in Längsrichtung erstreckende Durchbrüche auf, in die das Mitnahmeprofil in Form von radial nach innen weisenden Vorsprüngen eingreift. Die Durchbrüche können sich bis in die Nähe der beiden Enden des Profilrohrs erstrecken.

Das Schubrohr kann an seinem von der Außenmutter weg gerichteten Ende mit dem Gehäuse eines die Mitnahmeeinrichtung antreibenden Motors verbunden sein. Bei dieser Ausgestaltung bilden das Schubrohr, der Antriebsmotor mit seinem Gehäuse und die Mitnahmeeinrichtung, die zum Beispiel als Profilrohr ausgebildet ist, eine Einheit.

Die zweite Befestigungseinrichtung ist zweckmäßigerweise an der vom Schubrohr abgewandten Seite des Gehäuses, zentrisch zur Drehachse der Mitnahmeeinrichtung, angeordnet.

Zum Schutz der Gewindehohlspindel nach außen ist ein sich im wesentlichen über die Länge der Gewindehohlspindel erstreckendes inneres Teleskoprohr vorgesehen, das an einem Ende längs verschiebbar auf dem Schubrohr geführt ist und am anderen Ende drehbar und unverschiebbar auf der Gewindehohlspindel gelagert ist.

Zum weiteren Schutz der Innenspindel nach außen kann ein sich im Wesentlichen über die Länge der Innenspindel erstreckendes äußeres Teleskoprohr vorgesehen sein, das an einem Ende längs verschiebbar auf dem inneren Teleskoprohr geführt ist und am anderen Ende unverschiebbar und unverdrehbar gegenüber der Innenspindel angeordnet ist. Die erste Befestigungseinrichtung zur Befestigung der Vorrichtung an einem der relativ zueinander beweglichen Teile kann so ausgebildet sein, dass das von der Mitnahmeeinrichtung weg weisende Ende der Innenspindel und des äußeren Teleskoprohrs unverdrehbar mit einem dazu senkrecht angeordneten plattenförmigen Fuß verbunden ist. Ein solcher Fuß bildet zum Beispiel als eines der relativ zueinander beweglichen Teile den Standfuß eines höhenverstellbaren Tisches, während das andere, im vorliegenden Fall absolut bewegliche Teil die Tischplatte bildet.

Zur Begrenzung des Verstellweges ist vorzugsweise das Schubrohr an seiner Innenseite mit Endschaltern versehen, die durch die Gewindehohlspindel betätigbar sind.

Ein Ausführungsbeispiel der vorliegenden Erfindung wird nachstehend anhand der Zeichnung näher beschrieben. In der Zeichnung zeigen:

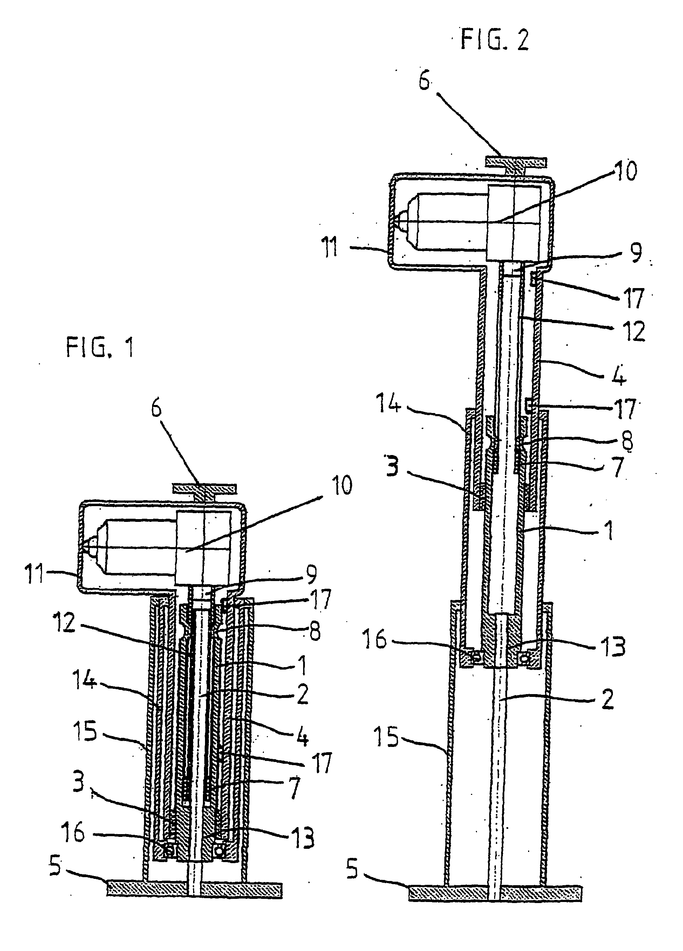

- Fig. 1: eine Vorrichtung zum Verstellen von relativ zueinander beweglichen Teilen, die insbesondere zur Höhenverstellung eines Tisches verwendet werden kann, in der vollständig eingefahrenen Position und
- Fig. 2: die Vorrichtung gemäß Fig. 1 in der vollständig ausgefahrenen Position.

wie aus der Zeichnung hervorgeht, umfasst die Vorrichtung im Wesentlichen eine antreibbare Gewindehohlspindel 1 mit einem Innen- und Außengewinde entgegengesetzter Steigungsrichtungen, eine mit dem Innengewinde der Gewindehohlspindel 1 zusammenwirkende Innenspindel 2 und ein über eine Außenmutter 3 der Gewindehohlspindel 1 zusammenwirkendes Schubrohr 4. Die Innenspindel 2 ist an ihrem freien Ende drehfest an einem plattenförmigen Fuß 5, der den Standfuß eines höhenverstellbaren Tisches bilden kann, verbunden. Die Befestigung an dem Fuß 5 bildet die erste Befestigungseinrichtung der Vorrichtung. Die zweite Befestigungseinrichtung 6, zum Beispiel zur Befestigung der Verstellvorrichtung an der Unterseite einer Tischplatte, ist mit dem Schubrohr 4 in noch weiter unten zu beschreibender Gestalt verbunden.

Wie aus der zeichnung hervorgeht, ist die Gewindehohlspindel 1 an einer um die Achse der Gewindehohlspindel 1 drehbar antreibbaren Mitnahmeeinrichtung 7 drehfest und längs verschiebbar gelagert.

Das mit der zweiten Befestigungseinrichtung 6 verbundene Schubrohr 4 ist gegenüber der Mitnahmeeinrichtung 7 in Längsrichtung festgelegt. Die Drehung der angetriebenen Mitnahmeeinrichtung 7 bewirkt eine Drehung der Gewindehohlspindel 1, wobei sich diese durch ihr Zusammenwirken mit der Außenmutter 3 des Schubrohrs 4 relativ zur Mitnahmeeinrichtung 7 in Längsrichtung bewegt. Die relative Verstellbewegung der Gewindehohlspindel 1 wird durch deren längs bewegbare Lagerung an der Mitnahmeeinrichtung 7 ermöglicht.

Wie aus der Zeichnung weiterhin hervorgeht, ist die Mitnahmeeinrichtung 7 als Profilrohr ausgebildet, in dessen Profil ein an der Gewindehohlspindel 1 angeordnetes Mitnahmeprofil 8 eingreift. Das Profilrohr ist an einem Ende mit der Motorwelle 9 eines Antriebsmotors 10 drehfest verbunden. Der Antriebsmotor 10 ist in einem Gehäuse 11 angeordnet, das an dem der Außenmutter 3 gegenüberliegenden Ende des Schubrohrs 4 befestigt ist, wobei dieses Ende eine Öffnung zum Hindurchtritt der mit der Motorwelle 9 fest verbundenen Mitnahmeeinrichtung 7 bildet. Die zweite Befestigungseinrichtung 6 ist an der vom Schubrohr 4 abgewandten Seite des Gehäuses 11 zentrisch zur Drehachse der Mitnahmeeinrichtung 7 fest angeordnet. Die Befestigungseinrichtung 6 ist plattenförmig zur Befestigung an der Unterseite einer Tischplatte zum Beispiel mittels Schrauben ausgebildet.

Der Antriebsmotor 10 weist ein Schneckenradgetriebe auf, so dass er in einem relativ schmalen, sich unmittelbar unter der Tischplatte seitlich erstreckenden Gehäuse untergebracht werden kann.

Das Gehäuse 11 kann einstückig, zum Beispiel in Form zweier Gehäuseschalen, mit dem Schubrohr (das dann ebenfalls aus zwei Schalen besteht) verbunden oder an das Schubrohr 4 angeflanscht sein.

Die als Profilrohr ausgebildete Mitnahmeeinrichtung weist zwei gegenüberliegende, sich in Längsrichtung erstreckende Durchbrüche 12 auf, in die das Mitnahmeprofil 8 in Form von radial nach innen weisenden Vorsprüngen eingreift. Die Durchbrüche erstrecken sich bis in die Nähe der beiden Enden des Profilrohrs.

Die Gewindehohlspindel 1 ist an ihrem von der Mitnahmeeinrichtung 7 weg weisenden Ende mit einer Innenmutter 13 versehen, die mit der Innenspindel 2 zusammenwirkt. Die Innenmutter 13 kann einstückig als Verengung der Hohlspindel 1 ausgebildet oder als separates Teil mit der Hohlspindel 1 verbunden sein.

Im übrigen Bereich ist die Gewindehohlspindel 1 zur gleitenden Aufnahme der als Profilrohr ausgebildeten Mitnahmeeinrichtung 7 ausgelegt. Das Mitnahmeprofil 8 ist durch zwei gegenüberliegende Einkerbungen der betreffenden Rohrstellen der Gewindehohlspindel 1 hergestellt.

Die radiale Bemessung der als Profilrohr ausgebildeten Mitnahmeeinrichtung 7, der Innenmutter 13 und des übrigen Bereichs der Gewindehohlspindel 1 sowie der Innenspindel 2 ist derart, dass der äußere Gewindedurchmesser der Innenspindel 2 kleiner ist als der Innendurchmesser des Profilrohrs.

Zum Schutz der Gewindehohlspindel 1 und der Innenspindel 2 nach außen sind ein inneres und ein äußeres gegenüber dem Schubrohr 4 unverdrehbares Teleskoprohr 14 bzw. 15 vorgesehen. Das innere Teleskoprohr 14 ist an einem Ende längs verschiebbar auf dem Schubrohr 4 geführt und am anderen Ende drehbar und unverschiebbar auf der Gewindehohlspindel durch ein Kugellager 16 gelagert, während das äußere Teleskoprohr 15 an einem Ende längs verschiebbar auf dem inneren Teleskoprohr 14 geführt und am anderen Ende unverschiebbar und unverdrehbar gegenüber der Innenspindel 2 angeordnet ist. Das äußere Teleskoprohr 15 ist dazu bei dem in der Zeichnung dargestellten Ausführungsbeispiel fest am Fuß 5 angebracht.

Zur Begrenzung des Verstellwegs ist das Schubrohr 4 an seiner Innenseite mit Endschaltern 17 versehen, die durch die Gewindehohlspindel betätigbar sind.

### Bezugszeichenliste

- 1: Gewindehohlspindel
- 2: Innenspindel
- 3: Außenmutter
- 4: Schubrohr
- 5: Fuß
- 6: zweite Befestigungseinrichtung
- 7: Mitnahmeeinrichtung
- 8: Mitnahmeprofil
- 9: Motorwelle
- 10: Antriebsmotor
- 11: Gehäuse
- 12: Durchbruch
- 13: Innenmutter
- 14: inneres Teleskoprohr
- 15: äußeres Teleskoprohr
- 16: Kugellager
- 17: Endschalter

## Patentansprüche

1. Vorrichtung zum Verstellen von relativ zueinander beweglichen Teilen, insbesondere Teilen von verstellbaren Möbeln, mit einer antreibbaren Gewindehohlspindel (1), deren Innen- und Außengewinde entgegengesetzte Steigungsrichtungen aufweisen, einer mit dem Innengewinde der Gewindehohlspindel (1) zusammenwirkenden Innenspindel (2), die mit einer ersten Befestigungseinrichtung zur Befestigung der Vorrichtung an einem der beweglichen Teile verbunden ist, und einem über eine Außenmutter (3) mit dem Außengewinde der Gewindehohlspindel (1) zusammenwirkenden Schubrohr (4), das mit einer zweiten Befestigungseinrichtung (6) zur Befestigung der Vorrichtung an einem anderen der relativ zueinander beweglichen Teile verbunden ist, wobei die Gewindehohlspindel (1) an einer um die Achse der Gewindehohlspindel (1) drehbar antreibbaren Mitnahmeeinrichtung (7) drehfest und längs bewegbar gelagert ist, die Mitnahmeeinrichtung (7) als Profilrohr ausgebildet ist, in dessen Profil ein an der Gewindehohlspindel (1) angeordnetes Mitnahmeprofil (8) eingreift, der äußere Gewindedurchmesser der Innenspindel (2) kleiner ist als der Innendurchmesser des Profilrohrs und wobei ein Schutz für das Gewinde der Gewindehohlspindel (1) vorgesehen ist, der sich im wesentlichen über die Länge ausgebildet erstreckt und als Teleskoprohr (14) ausgebildet ist, das an einem Ende längs verschiebbar auf dem Schubrohr (4) geführt ist, **dadurch gekennzeichnet, dass** der Schutz am anderen Ende drehbar und unverschiebbar auf der Gewindehohlspindel (1) gelagert ist.

2. Vorrichtung nach Anspruch 1, **dadurch gekennzeichnet, dass** das Profilrohr an einem Ende mit der Motorwelle (9) eines Antriebsmotors (10) drehfest verbunden ist.

3. Vorrichtung nach Anspruch 1 oder 2, **dadurch gekennzeichnet, dass** das Profilrohr sich mit einem Ende in die Gewindchohlspindel (1) hineinerstreckt und das Mitnahmeprofil (8) an dem zum Profilrohr gerichteten Ende an der Innenweite der Gewindehohlspindel (1) angeordnet ist.

4. Vorrichtung nach Anspruch 3, **dadurch gekennzeichnet, dass** die Gewindehohlspindel (1) an ihrem vom Profilrohr weg gerichteten Ende eine Verengung aufweist, in der das Innengewinde ausgebildet ist, und im übrigen Bereich zur gleitenden Aufnahme des Profilrohrs ausgebildet ist.

5. Vorrichtung nach Anspruch 4, **dadurch gekennzeichnet, dass** das Profilrohr zwei gegenüberliegende, sich in Längsrichtung erstreckende Durchbrüche (12) aufweist, in die das Mitnahmeprofil (8) in Form von radial nach innen weisenden Vorsprüngen eingreift.

6. Vorrichtung nach einem der Ansprüche 1 bis 5, **dadurch gekennzeichnet, dass** das Schubrohr (4) an seinem von der Außenmutter (3) weg weisenden Ende mit dem Gehäuse (11) eines die Mitnahmeeinrichtung (7) antreibenden Motors (10) verbunden ist.

7. Vorrichtung nach Anspruch 6, **dadurch gekennzeichnet, dass** die zweite Befestigungseinrichtung (6) an der vom Schubrohr (4) abgewandten Seite des Gehäuses (11) angeordnet ist.

8. Vorrichtung nach Anspruch einem der Ansprüche 1 bis 7, **dadurch gekennzeichnet, dass** ein sich im Wesentlichen über die Länge der Innenspindel (2) erstreckendes, relative zu dem ersten Teleskoprohr (14) äußeres Teleskoprohr (15) vorgesehen ist, das an einem Ende längs verschiebbar auf dem inneren Teleskoprohr (14) geführt ist und am anderen Ende unverschiebbar und unverdrehbar gegenüber der Innenspindel (2) angeordnet ist.

9. Vorrichtung nach Anspruch 8, **dadurch gekennzeichnet, dass** das von der Mitnahmeeinrichtung (7) weg weisende Ende der Innenspindel (2) und des äußeren Teleskoprohres (15) unverdrehbar mit einem dazu senkrecht angeordneten plattenförmigen Fuß (5) verbunden ist.

10. Vorrichtung nach einem der Ansprüche 1, bis 9, **dadurch gekennzeichnet, dass** das Schubrohr (4) an seiner Innenseite mit Endschaltern (17) versehen ist, die durch die Gewindehohlspindel (1) betätigbar sind.

## Claims

1. Device for adjusting parts which can move in relation to each other, especially parts of adjustable furniture, comprising a driveable threaded hollow spindle (1), whose inner and outer threads rise in opposing directions, an inner spindle (2) which interacts with the inner thread of the threaded hollow spindle (1) and which is connected to a first fixing device in order to secure the device to one of the moveable parts, and a propulsive tube (4) which interacts with the outer thread of the threaded hollow spindle (1) via an outer nut (3) and is connected to a second fixing device (6) enabling fixation of the device on another of the parts which can move in relation to each other, where the threaded hollow spindle (1) is mounted in a rotationally fixed and longitudinally displaceable manner on a catch device (7) which can be rotationally driven about the axis of the threaded hollow spindle (1), the catch device (7) being designed as a profile tube, whose profile is engaged by a catch profile (8) provided on the threaded hollow spindle (1), the outer thread diameter of the inner spindle (2) being smaller than the inside diameter of the profile tube and where a guard is provided for the thread of the threaded hollow spindle (1) that extends essentially over the length of the same and is designed as a telescopic tube (14), one end of which is guided in longitudinally sliding fashion on the propulsive tube (4), **characterised in that** the other end of the guard is mounted in rotating and non-sliding fashion on the threaded hollow spindle (1).

2. Device according to Claim 1, **characterised in that** one end of the profile tube is connected to the motor shaft (9) of a drive motor (10) in non-rotating fashion.

3. Device according to Claim 1 or 2, **characterised in that** one end of the profile tube extends into the threaded hollow spindle (1) and the catch profile (8) is mounted on the inside of the threaded hollow spindle (1) on the end facing the profile tube.

4. Device according to Claim 3, **characterised in that** the end of the threaded hollow spindle (1) facing away from the profile tube is provided with a constriction, in which the inner thread is formed, and the remaining area is designed to accommodate the profile tube in sliding fashion.

5. Device according to Claim 4, **characterised in that** the profile tube has two, opposite perforations (12) extending in the longitudinal direction, into which the catch profile (8) engages with radially inward projections.

6. Device according to one of Claims 1 to 5, **characterised in that** the propulsive tube (4) is connected at the end facing away from the outer nut (3) to the housing (11) of a motor (10) that drives the catch device (7).

7. Device according to Claim 6, **characterised in that** the second fixing device (6) is mounted on the side of the housing (11) facing away from the propulsive tube (4).

8. Device according to one of Claims 1 to 7, **characterised in that** an outer telescopic tube (15), relative to the first telescopic tube (14), extending essentially over the length of the inner spindle (2) is provided, one end of which is guided in longitudinally sliding fashion on the inner telescopic tube (14) and the other end of which is mounted in non-sliding and non-rotating fashion relative to the inner spindle (2).

9. Device according to Claim 8, **characterised in that** the ends of the inner spindle (2) and the outer telescopic tube (15) facing away from the catch device (7) are connected in non-rotating fashion to a plate-shaped foot (5) perpendicular to them.

10. Device according to one of Claims 1 to 9, **characterised in that** the inside of the propulsive tube (4) is equipped with limit switches (17) that can be actuated by the threaded hollow spindle (1).

## Revendications

1. Dispositif de réglage du déplacement de pièces mobiles l'une par rapport à l'autre, en particulier de pièces appartenant à des meubles réglables, comportant une broche creuse à pas de vis (1) susceptible d'être entraînée, dont le taraudage et le filetage présentent des pas de directions opposées, une broche intérieure (2) coopérant avec le taraudage de la broche creuse à pas de vis (1) et reliée à un premier organe de fixation pour fixer le dispositif sur l'une des pièces mobiles, et comportant un tube de poussée (4) qui coopère avec le filetage de la broche creuse à pas de vis (1) via un écrou extérieur et qui est relié à un deuxième organe de fixation (6) pour fixer le dispositif sur l'autre pièce des pièces mobiles l'une par rapport à l'autre, la broche creuse à pas de vis (1) étant montée solidairement en rotation et mobile en direction longitudinale sur un organe entraîneur (7) susceptible d'être entraîné en rotation autour de l'axe de la broche creuse à pas de vis (1), l'organe entraîneur (7) étant réalisé sous forme de tube profilé dans le profilé duquel s'engage un profilé d'entraîneur (8) agencé sur la broche creuse à pas de vis (1), le diamètre extérieur du filetage de la broche intérieure (2) étant inférieur au diamètre intérieur du tube profilé et une protection étant prévue pour le pas de vis de la broche creuse à pas de vis (1), qui s'étend en étant réalisée sensiblement sur la longueur, **caractérisé en ce que** la protection est monté, avec l'autre extrémité, mobile en rotation et immobile en translation sur la broche creuse à pas de vis (1).

2. Dispositif selon la revendication 1, **caractérisé en ce que** le tube profilé est relié par une extrémité solidairement en rotation à l'arbre moteur (9) d'un moteur d'entraînement (10).

3. Dispositif selon l'une ou l'autre des revendications 1 et 2, **caractérisé en ce que** le tube profilé s'étend par une extrémité jusque dans la broche creuse à pas de vis (1) et **en ce que** sur l'extrémité dirigée vers le tube profilé, le profilé entraîneur (8) est agencé sur le côté intérieur de la broche creuse à pas de vis (1).

4. Dispositif selon la revendication 3, **caractérisé en ce que** la broche creuse à pas de vis (1) présente un rétrécissement à son extrémité dirigée en éloignement du tube profilé, rétrécissement dans lequel est réalisé le taraudage, et dans la zone restante ladite broche est réalisée pour recevoir en coulissement le tube profilé.

5. Dispositif selon la revendication 4, **caractérisé en ce que** le tube profilé présente deux traversées (12) opposées s'étendant en direction longitudinale, dans lesquelles s'engage le profilée entraîneur (8) sous forme de saillies dirigées radialement vers l'intérieur.

6. Dispositif selon l'une des revendications 1 à 5, **caractérisé en ce que** le tube de poussée (4) est reliée, à son extrémité dirigée en éloignement de l'écrou extérieur (3), au carter (11) d'un moteur (10) entraînant le dispositif entraîneur (7).

7. Dispositif selon la revendication 6, **caractérisé en ce que** le deuxième dispositif de fixation (6) est agencé sur le côté du carter (11) détourné du tube de poussée (4).

8. Dispositif selon l'une des revendications 1 à 7, **caractérisé en ce qu'**il est prévu un tube télescopique (15) s'étendant sensiblement sur la longueur de la broche intérieure (2) et extérieur par rapport au premier tube télescopique (14), qui est guidé en translation longitudinale sur le tube télescopique intérieur (14) à une extrémité et qui est agencé de façon immobile en translation et immobile en rotation par rapport à la broche intérieure (2) à l'autre extrémité.

9. Dispositif selon la revendication 8, **caractérisé en ce que** l'extrémité de la broche intérieure (2) et du tube télescopique extérieur (15), qui est dirigée en éloignement du dispositif entraîneur (7) est reliée de façon immobile en rotation à un pied (5) en forme de plaque agencé perpendiculairement à celle-ci.

10. Dispositif selon l'une des revendications 1 à 9, **caractérisé en ce que** le tube de poussée (4) est pourvu sur son côté intérieur d'interrupteurs de fin de course (17) actionnables par la broche creuse à pas de vis (1).
